# EUROPEAN PATENT APPLICATION

(11) **EP 2 042 708 A1**
(43) Date of publication of application: **01.04.2009**
(21) Application number: 07425595.1
(22) Date of filing: 26.09.2007
(51) Int. Cl.: F02D 9/10, F16K 1/22, F16K 1/226

(54) **Butterfly valve for an internal combustion engine**

(71) Applicant: MAGNETI MARELLI POWERTRAIN S.p.A., 20011 Corbetta (IT)
(72) Inventor: Colli, Marcello, 42100 Reggio Emilia (IT); Bellato, Nazario, 40131 Bologna (IT); Vutera Cuda, Salvatore, 40019 Sant'Agata Bolognese (IT); Levato, Luca, 87040 Castolibero (IT); Russo, Orlando, 87054 Rogliano (IT)
(74) Representative: Jorio, Paolo

(57) **Abstract**

A butterfly valve (1) for an internal combustion engine provided with: a valve body (2); a tubular feeding pipe (4) defined in the valve body (2); and a butterfly valve plate (5), which is arranged inside the feeding pipe (4) and rotates about a rotation axis (7) between a maximum opening and a closing position of the feeding pipe (4); an internal wall (34) of the feeding pipe (4) presents an annular step (35), which is perpendicular to a longitudinal axis (36) of the feeding pipe (4) and consists of two half-steps (37) arranged in a reciprocally opposite manner; and the butterfly valve plate (5) presents two wings (38), each of which abuts an external edge (39) thereof opposite to the external edge (39) of the other wing (38) against a corresponding half-step (37) of the annular step (35), in the closing position.

## Description

### TECHNICAL FIELD

The present invention relates to a butterfly valve for an internal combustion engine.

### BACKGROUND ART

A butterfly valve, which is arranged upstream of an intake manifold and adjusts the flow rate of the air which is fed to the cylinders, is provided in gasoline-fed internal combustion engines. A typical butterfly valve, currently marketed, presents a valve body provided with a tubular feeding pipe through which the air intaken by the internal combustion engine flows; inside the feeding pipe there is accommodated a butterfly valve plate, which is keyed onto a rotating shaft to rotate between an opening position and a closing position of the feeding pipe. The rotation of the butterfly valve plate is controlled by an actuator device normally comprising an electric motor coupled to the butterfly valve plate shaft by means of a gear transmission and at least one spring which biases the butterfly valve plate shaft towards the closing position (or better towards a limp-home position near the closing position).

In the closing position, the sealing of the butterfly valve plate is determined by the fact that the butterfly valve plate presents exactly the same shape and size as the internal section of the feeding pipe so as to seal the feeding pipe itself; in other words, the butterfly valve plate must not be smaller than the internal section of the feeding pipe in order to ensure a good sealing in the closing position and, at the same time, must absolutely not be larger than the internal section of the feeding pipe to prevent sticking against the internal wall of the feeding pipe (a very severe event which determines the jamming of the butterfly valve and thus the stopping of the internal combustion engine).

In order to ensure that in the closing position the butterfly valve plate actually closes the feeding pipe determining very low leakages of air (and thus negligible by the engine control), the butterfly valve plate and the feeding pipe must be made with a high manufacturing accuracy in terms of both size and shape. Consequently, in order to manufacture the butterfly valve plate and the feeding pipe, it is necessary to use materials and machining processes which allow to ensure very low construction tolerances and which are thus particularly expensive.

Furthermore, it is necessary to ensure that the butterfly valve plate does not stick against the internal wall of the feeding pipe by effect of the thermal expansions determined by the changes of temperature to which the butterfly valve is inevitably subjected during its life; consequently for manufacturing the butterfly valve plate and the feeding pipe it is necessary to use materials which have identical or however very similar thermal expansion coefficients.

### DISCLOSURE OF INVENTION

It is the object of the present invention to make a butterfly valve for an internal combustion engine, such a butterfly valve being free from the drawbacks described above and, specifically, being easy and cost-effective to manufacture.

According to the present invention, a butterfly valve for an internal combustion engine is made as recited in the appended claims.

### BRIEF DESCRIPTION OF THE DRAWINGS

The present invention will now be described with reference to the accompanying drawings, which illustrate a non-limitative embodiment thereof, in which:
- figure 1 is a partially exploded perspective view, with parts removed for clarity, of a butterfly valve made according to the present invention;
- figure 2 is a front view, with parts removed for clarity, of the butterfly valve in figure 1;
- figure 3 is a perspective and longitudinal section view of a feeding pipe and a butterfly valve plate of the butterfly valve in figure 1;
- figure 4 is a longitudinal section view of the feeding pipe and the butterfly valve plate in figure 3;
- figure 5 is a top cross section view of the feeding pipe in figure 3;
- figure 6 is a bottom cross section view of the feeding pipe in figure 3; and
- figure 7 is a diagrammatic view of an injection moulding step of the feeding pipe in figure 3.

### PREFERRED EMBODIMENTS OF THE INVENTION

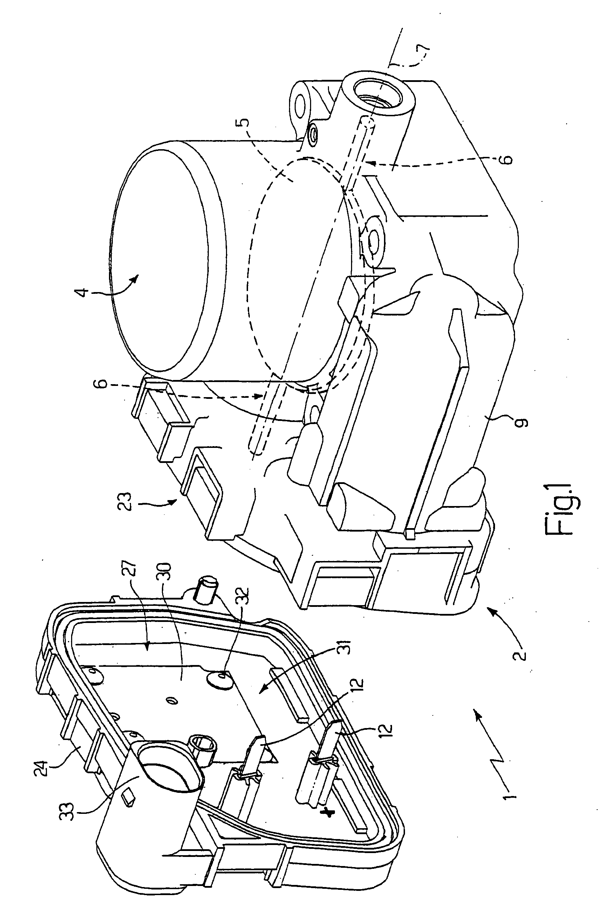

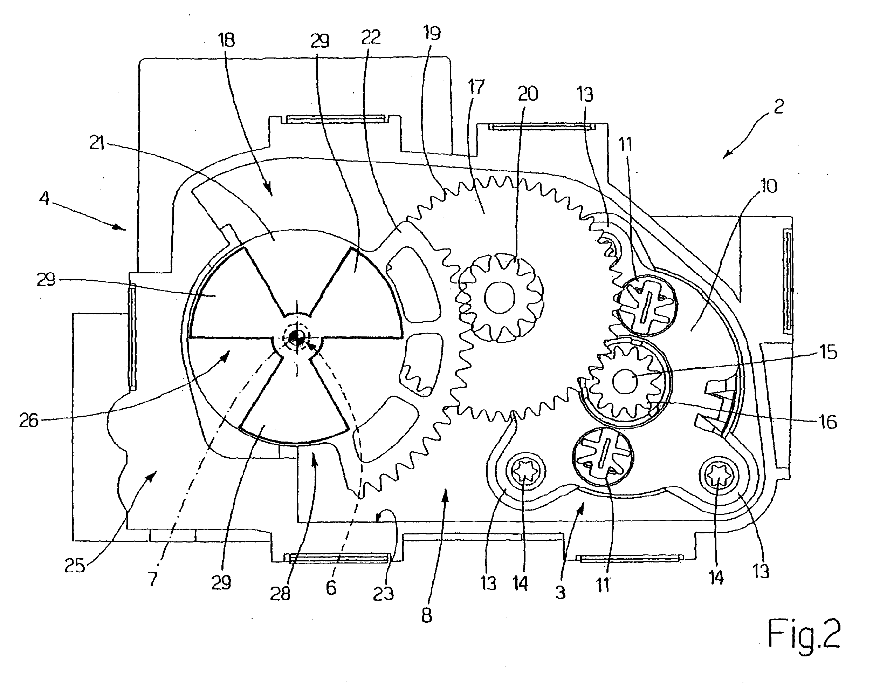

In figure 1, numeral 1 indicates as a whole an electronically controlled butterfly valve for an internal combustion engine (not shown). The butterfly valve 1 comprises a valve body 2 accommodating an electric motor 3 (shown in figure 2), a tubular feeding pipe 4 with circular section through which the air intaken by the internal combustion engine flows, and a butterfly valve plate 5 (diagrammatically shown with a broken line), which is of circular shape, engages the feeding pipe 4 and rotates between an opening position and a closing position of the feeding pipe 4 by effect of the action of an actuator device. The butterfly valve plate 5 is keyed onto a shaft 6 presenting a longitudinal rotation axis 7 to rotate between the opening position and the closing position by effect of the action of the actuator device.

As shown in figure 2, the actuator device comprises the electric motor 3 which is coupled to the shaft 6 itself by means of a gear transmission 8, a return spring (not shown and coupled to the shaft 6) adapted to rotate the butterfly valve plate 5 towards the closing position, and a contrast spring (not shown and coupled to the shaft 6) adapted to rotate the butterfly valve plate 5 towards a partial opening position or limp-home position defined by an opposed body (not shown) against the bias of the return spring.

The electric motor 3 presents a cylindrical body, which is arranged in a tubular housing 9 (shown in figure 1) arranged by the side of the feeding pipe 4 and is maintained in a determined position inside the tubular housing 9 by a metallic plate 10; the metallic plate 10 presents a pair of female electric connectors 11, which are electrically connected to the electric motor 3 and are adapted to be engaged by a pair of corresponding male electric connectors 12 (shown in figure 1). In order to ensure a correct fastening of the electric motor 3 to the valve body 2, the plate 10 presents three perforated radial protrusions 13, through which the corresponding fastening screws 14 are inserted into the valve body 2.

The electric motor 3 presents a shaft 15 ending with a toothed wheel 16, which is mechanically connected to the shaft 6 by means of an idle toothed wheel 17 interposed between the toothed wheel 16 and an end gear 18 keyed onto the shaft 6. The toothed wheel 17 presents a first set of teeth 19 coupled to the toothed wheel 16 and a second set of teeth 20 coupled to the end gear 18; the diameter of the first set of teeth 19 is different from the diameter of the second set of teeth 20, thus the toothed wheel 17 determines a non-unitary transmission ratio. The end gear 18 is defined by a solid central cylindrical body 21 keyed onto the shaft 6 and provided with a circular crown portion 22 presenting a set of teeth coupled to the toothed wheel 17.

The gear transmission 8 and the plate 10 are arranged in a chamber 23 of the valve body 2, which is closed by a removable lid 24 (shown in figure 1).

As shown in figures 1 and 2, the butterfly valve 1 comprises an inductive position sensor of the contactless type, which is coupled to the shaft 6 and is adapted to detect the angular position of the shaft 6 and, thus, of the butterfly valve plate 5 to allow a feedback control of the position of the butterfly valve plate 5 itself. The position sensor 25 is of the type described in patent US6236199B1 and comprises a rotor 26 integral with the shaft 6 and a stator 27 supported by the lid 24 and arranged facing the rotor 26 in use; the rotor 26 is defined by a flat metallic turn 28, which is closed in short-circuit, presents a set of lobes 29, and is incorporated in the central cylindrical body 21 of the end gear 18. The stator 27 of the position sensor 25 comprises a support header 30, which is connected to an internal wall 31 of the lid 24 by means of four plastic rivets 32.

As shown in figure 1, the lid 24 is provided with a female electric connector 33, which comprises a set of electric contacts (not shown in detail): two electric contacts are connected to the male electric connectors 12 adapted to supply the electric motor 3, while the other electric contacts are connected to the stator 27 of the position sensor 25; when the lid 24 is arranged in contact with the valve body 2 to close the chamber 23, the female electric connector 33 is arranged over the tubular housing 9 of the electric motor 3.

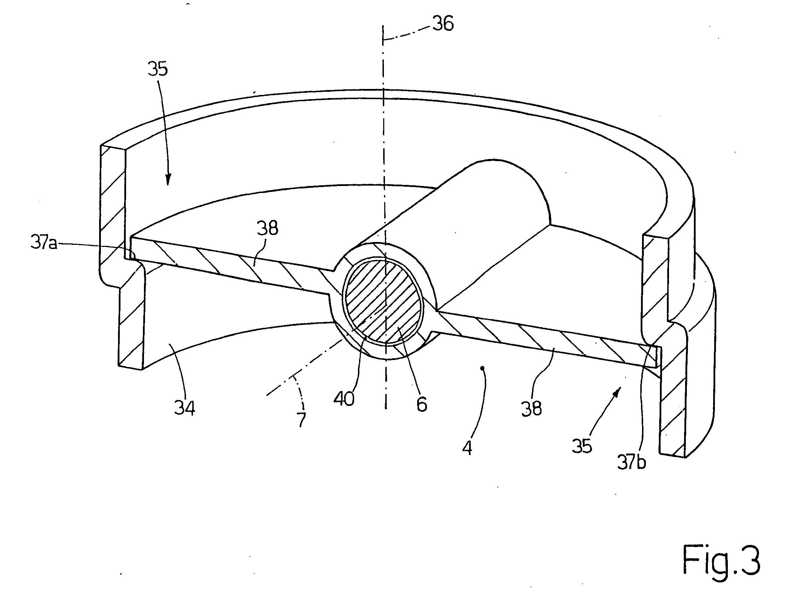

As shown in figures 3-6, an internal wall 34 of the feeding pipe 4 presents an annular step 35, which is perpendicular to a longitudinal axis 36 of the feeding pipe 4 and consists of two half-steps 37 (indicated by numerals 37a and 37b in figures 3-6) arranged in a reciprocally opposite manner; in other words, the half-step 37a is met going along the feeding pipe 4 in a given direction, while the other half-step 37b is met going along the feeding pipe 4 in a given direction opposite to the previous one. Furthermore, the butterfly valve plate 5 presents two wings 38, each of which in the closing position abuts an external edge 39 thereof opposite to the external edge 39 of the other wing 38 against a corresponding half-step 37 of the annular step 35.

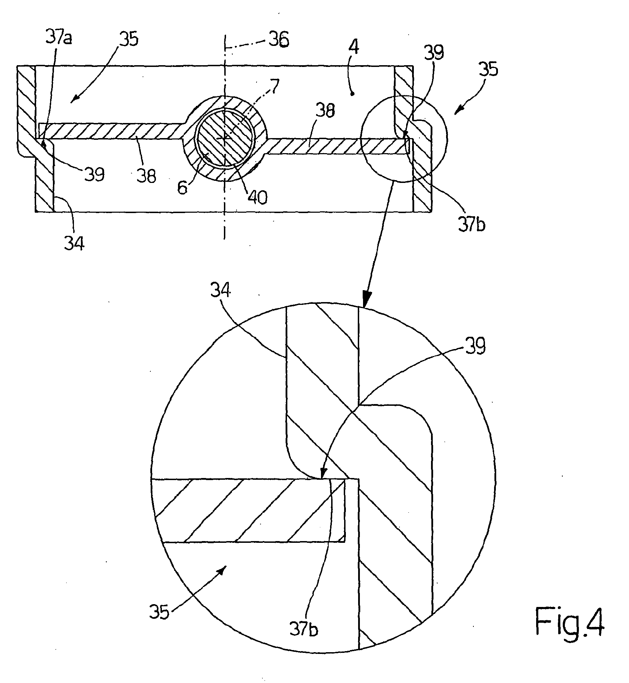

According to the embodiment shown in figures 3 and 4, the two half-steps 37 are reciprocally coplanar and the two wings 38 of the butterfly valve plate 5 are reciprocally offset (i.e. they are not reciprocally coplanar but are parallel and arranged at a certain distance from each other); according to a different embodiment (not shown) the two half-steps 37 are reciprocally offset (i.e. they are not reciprocally coplanar bur are parallel and arranged at a certain distance from each other) and the two wings 38 of the butterfly valve plate 5 are reciprocally coplanar.

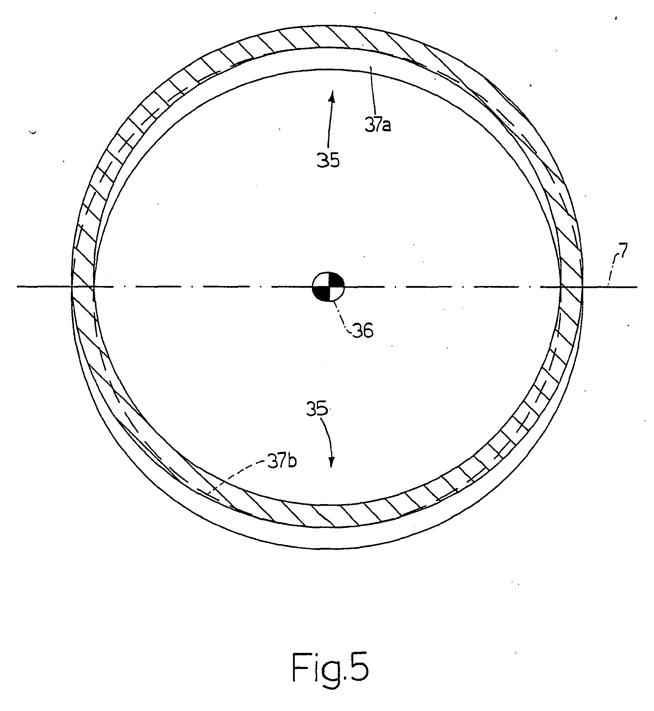

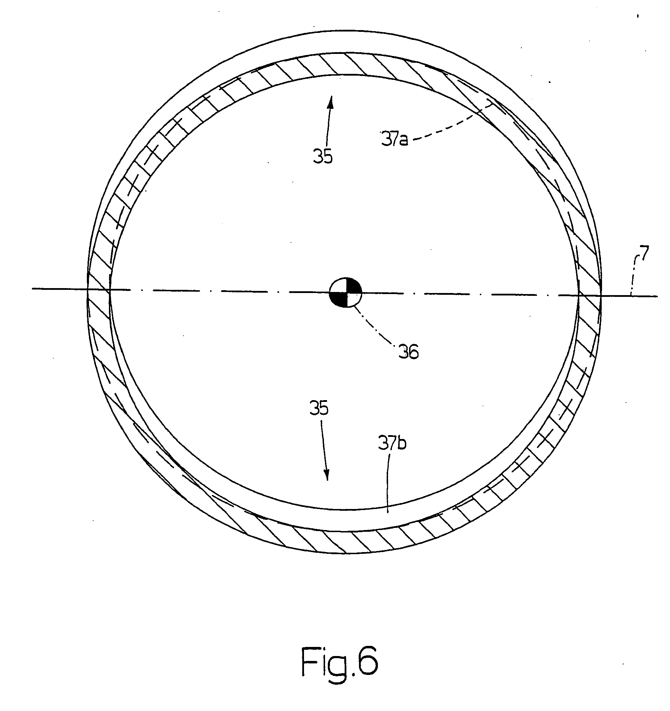

As shown in figures 5 and 6, the annular step 35 presents a zero thickness at the rotation axis 7 of the butterfly valve plate 5 and presents a maximum thickness perpendicularly to the rotation axis 7 of the butterfly valve plate 5.

As shown in figures 3 and 4, the butterfly valve plate 5 is keyed onto a rotating shaft 6, which is arranged through two through holes (not shown) which are reciprocally aligned and are obtained through the feeding pipe 4. Furthermore, the butterfly valve plate 5 centrally presents a through hole 40, which is adapted to receive the shaft 6 which is inserted through the through hole 40 itself.

According to a different embodiment (not shown), the external edge 39 of the butterfly valve plate 5 or the annular step 35 are provided with an elastic gasket for increasing the sealing in the closing position; obviously, the elastic gasket must be divided into two half-gaskets arranged on two opposite walls of the external edge 39 of the butterfly valve plate 5 or on the two half-steps 37 of the annular step 35.

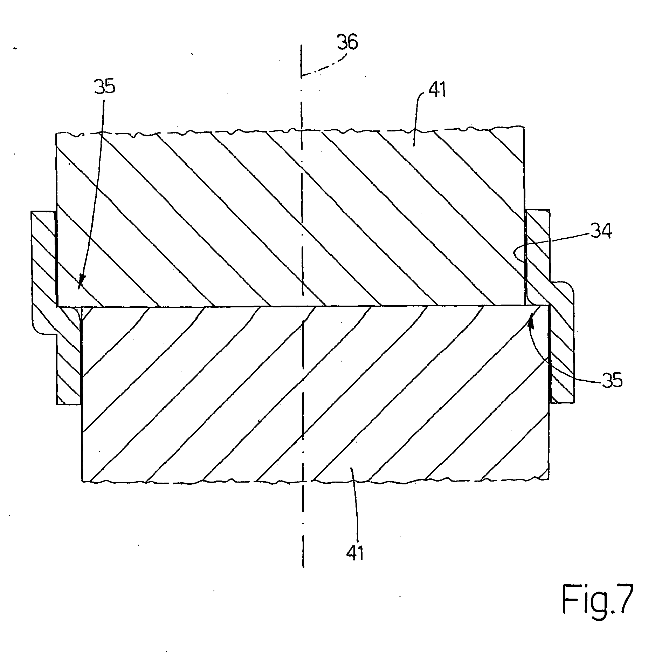

As diagrammatically shown in figure 7, the feeding pipe 4 is made by injection moulding using two tubular cores 41, which are reciprocally joined at the position of the butterfly valve plate 5 and which are arranged reciprocally offset along a direction perpendicular to a longitudinal axis 36 of the feeding pipe 4. In the embodiment shown in the accompanying figures, the two cores 41 are reciprocally offset by a distance equal to the thickness of the wall of the feeding pipe 4.

In the butterfly valve 1 described above, in the closing position, the sealing of the butterfly valve plate 5 is not, as in a traditional butterfly valve, determined by the fact that the butterfly valve plate 5 presents exactly the same shape and size as the internal section of the feeding pipe 4 so as to seal the feeding pipe 4 itself; on the contrary, in the butterfly valve 1 described above, the sealing of the butterfly valve plate 5 is determined by the fact that the butterfly valve plate 5 abuts its external edge 39 against the annular step 35. Consequently, the butterfly valve plate 5 may present a smaller size than that of the internal section of the feeding pipe 4 while continuing to ensure a perfect sealing in the closing position; in this manner, the butterfly valve plate 5 may be slightly smaller in size than the internal section of the feeding pipe 4 to avoid sticking against the internal wall 34 of the feeding pipe 4 without in any way compromising the sealing in the closing position. Consequently, in the butterfly valve 1 described above the manufacturing tolerance of the feeding pipe 4 and the butterfly valve plate 5 may be much wider than a traditional butterfly valve with an apparent and considerable saving of materials and machining. For example, standard polymers of the commercial type, moulded with commercial mechanical tolerances, instead of precision tolerances, may be used to make the feeding pipe 4 and the butterfly valve plate 5.

Furthermore, in the butterfly valve 1 described above, the sticking of the butterfly valve plate 5 against the internal wall 34 of the feeding pipe 4 by effect of the thermal expansions determined by the changes of temperature to which the butterfly valve 1 inevitably subjected during its life is cancelled.

Finally, possible deposits of dirt carried by the intaken air onto the annular step 35 do not in any way imply a performance decay of the butterfly valve 1 but, on the contrary, could even increase the sealing of the butterfly valve plate 5 in the closing position (i.e. they reduce possible leakages of air) performing the function of elastic gasket.

In the embodiment shown in the accompanying figures, the butterfly valve 1 adjusts the flow rate of the air intaken by the internal combustion engine; obviously, in other applications, the butterfly valve 1 could adjust a flow rate of air other than the air intaken by the internal combustion engine.

## Claims

1. A butterfly valve (1) for an internal combustion engine and comprising:
a valve body (2);
a tubular feeding pipe (4) defined in the valve body (2); and
a butterfly valve plate (5), which is arranged inside the feeding pipe (4) and rotates about a rotation axis (7) between a maximum opening and a closing position of the feeding pipe (4);
the butterfly valve (1) is **characterised in that:** an internal wall (34) of the feeding pipe (4) presents an annular step (35), which is perpendicular to a longitudinal axis (36) of the feeding pipe (4) and consists of two half-steps (37) arranged in a reciprocally opposite manner; and
the butterfly valve plate (5) presents two wings (38), each of which abuts an external edge (39) thereof opposite to the external edge (39) of the other wing (38) against a corresponding half-step (37) of the annular step (35), in the closing position.

2. A butterfly valve (1) according to claim 1, wherein the two half-steps (37) are reciprocally coplanar and the two wings (38) of the butterfly valve plate (5) are reciprocally offset.

3. A butterfly valve (1) according to claim 1, wherein the two half-steps (37) are reciprocally offset and the two wings (38) of the butterfly valve plate (5) are reciprocally coplanar.

4. A butterfly valve (1) according to claim 1, 2 or 3, wherein the annular step (35) presents a zero thickness at the rotation axis (7) of the butterfly valve plate (5) and presents a maximum thickness perpendicularly to the rotation axis (7) of the butterfly valve plate (5).

5. A butterfly valve (1) according to any one of the claims from 1 to 4, wherein the butterfly valve plate (5) is keyed onto a rotation shaft (6).

6. A butterfly valve (1) according to claim 5, wherein the shaft (6) is arranged through two through holes, which are reciprocally aligned and which are obtained through the feeding pipe (4).

7. A butterfly valve (1) according to claim 6, wherein the butterfly valve plate (5) centrally presents a through hole (40), which is adapted to receive the shaft (6) which is inserted through the through hole (40) itself.

8. A butterfly valve (1) according to any one of the claims from 1 to 7 and comprising an elastic gasket arranged on the external edge (39) of the butterfly valve plate (5) or on the annular step (35).

9. A butterfly valve (1) according to any one of the claims from 1 to 8, wherein the feeding pipe (4) is made by injection moulding using two tubular cores (41), which are reciprocally joined at the position of the butterfly valve plate (5) and which are arranged reciprocally offset along a direction perpendicular to a longitudinal axis (36) of the feeding pipe (4).

10. A butterfly valve (1) according to claim 9, wherein the two cores (41) are reciprocally offset by a distance equal to the thickness of the wall of the feeding pipe (4).
